# FASCICULE DE BREVET EUROPEEN

(11) **EP 3 898 417 B1**
(45) Date de publication et mention de la délivrance du brevet: **05.02.2025**
(21) Numéro de dépôt: 19845605.5
(22) Date de dépôt: 18.12.2019
(51) Int. Cl.: B64F 1/14, B64B 1/66

(54) **SYSTEME ET PROCEDE D'ARRIMAGE AMELIORES D'UN AEROSTAT SUR UNE STRUCTURE RECEPTRICE**
SYSTEM UND VERFAHREN ZUM VERBESSERTEN FESTMACHEN EINES AEROSTATS AN EINER AUFNAHMESTRUKTUR
SYSTEM AND METHOD FOR IMPROVED MOORING OF AN AEROSTAT TO A RECEPTIVE STRUCTURE

(30) Priorité: 21.12.2018 FR 1874017
(43) Date de publication de la demande: 27.10.2021
(73) Titulaire: Flying Whales, 92150 Suresnes (FR)
(72) Inventeur: LE BLANC, Benoît, 75007 PARIS (FR); LEFRANCOIS, Bastien, 92370 CHAVILLE (FR)
(74) Mandataire: IP Trust
(86) Numéro de dépôt international: PCT/FR2019/053136
(87) Numéro de publication internationale: WO 2020/128316

(56) Documents cités:
- EP-A2- 2 218 642
- WO-A1-2018/099870
- WO-A2-2004/087499
- DE-A1- 19 924 468

## Description

### Domaine technique

La présente invention concerne un système pour arrimer un aérostat à une structure réceptrice mobile ou fixe. Elle vise aussi un procédé d'arrimage mis en oeuvre dans ce système.

Le domaine de l'invention est plus particulièrement, mais de manière non limitative, celui des ballons dirigeables.

### État de la technique antérieure

L'arrimage des grands aérostats dirigeables à des mâts de stationnement a toujours été une manoeuvre délicate qui nécessitait l'intervention d'un grand nombre de personnes au sol, parfois supérieur à plus d'une centaine, et qui s'avérait longue et présentant des risques à la fois pour les équipages de ces aérostats et pour les personnes au sol. Cette manoeuvre représentait également des coûts opérationnels significatifs.

Par ailleurs, le pilotage de ces dirigeables en approche de structures réceptrices au sol est en général complexe du fait de conditions aérodynamiques parfois défavorables à l'approche du sol et de la forte inertie intrinsèque de ces aéronefs.

La demanderesse a déposé la demande WO2018099870A1 qui décrit un système d'arrimage qui facilite l'approche d'un aérostat vers une structure réceptrice et permet son arrimage plus aisément et plus sûrement que dans les conditions antérieures.

À cet effet, il a été proposé un système pour arrimer un aérostat à une structure réceptrice, comprenant un drone aérien contrôlable pour se déplacer entre cet aérostat et cette structure réceptrice en emportant une première extrémité d'un câble dont la seconde extrémité est fixée à l'aérostat ou à la structure réceptrice et pour fixer cette première extrémité à la structure réceptrice ou à l'aérostat, de sorte que ce câble relie l'aérostat à la structure réceptrice. Le document EP 2 218 642 A2 divulgue un système approprié pour arrimer un aéronef à une structure réceptrice.

La demanderesse a poursuivi ses recherches dans le but de proposer un système qui vise toujours à faciliter l'approche d'un aérostat vers une structure réceptrice et permet son arrimage plus aisément et plus sûrement que dans les conditions actuelles, tout en simplifiant la solution précédemment proposée.

### Exposé de l'invention

Un but de l'invention est notamment de remédier à tout ou partie des inconvénients précités.

Selon un premier aspect de l'invention, il est proposé un système pour arrimer un aérostat à une structure réceptrice, comprenant :
- un câble d'arrimage agencé pour être fixé sur l'aérostat par l'une de ses extrémités,
- un mât agencé pour être monté à rotation sur la structure réceptrice, le mât comportant un treuil à tambour d'enroulement comportant une fente agencée pour recevoir une partie du câble située du côté de l'autre extrémité du câble d'arrimage.

Selon le premier aspect de l'invention, le câble d'arrimage est lesté par un poids en son autre extrémité, et le mât comporte en outre un dispositif de guidage à fourche présentant deux branches s'étendant selon deux directions divergentes.

Avantageusement, le câble d'arrimage et le dispositif de guidage à fourche sont en matériaux conducteurs d'électricité. Cette caractéristique permet une décharge électrostatique de l'aérostat.

Le dispositif de guidage présente un dispositif d'emprisonnement séparant le dispositif de guidage en une partie proximale et une partie distale, la partie distale comportant les deux branches, ledit dispositif d'emprisonnement étant agencé pour empêcher une partie du câble lesté présente dans la partie proximale de parvenir dans la partie distale. Cette caractéristique a pour effet d'empêcher un départ non volontaire du câble. Il peut par ailleurs être prévu de piloter le dispositif d'emprisonnement de sorte qu'il présente une position déverrouillée dans laquelle le câble n'est plus prisonnier.

Le système selon l'invention comporte un détecteur de passage de câble présentant un axe de détection au niveau du dispositif d'emprisonnement. Il est ainsi possible de circonscrire la localisation de la partie de câble dans la sous-partie disposée du côté du mât.

A titre d'exemple, le mât peut comporter en outre un dispositif de capture du câble d'arrimage disposé entre le dispositif de guidage et le treuil à tambour d'enroulement.

Il est également prévu que le câble d'arrimage puisse présenter des données de distance inscrites le long du câble d'arrimage et que le mât comporte un lecteur desdites données de distance.

Le système selon l'invention peut avantageusement comporter un moteur de mise en rotation du treuil à tambour d'enroulement et un contrôleur configuré pour piloter le moteur à partir des données lues par le lecteur.

Selon un deuxième aspect de l'invention, il est proposé un kit comportant :
- un câble d'arrimage agencé pour être fixé sur l'aérostat par l'une de ses extrémités,
- un mât agencé pour être monté à rotation sur la structure réceptrice, le mât comportant un treuil à tambour d'enroulement comportant une fente agencée pour recevoir une partie du câble située du côté de l'autre extrémité du câble d'arrimage.

Le câble d'arrimage est lesté par un poids en son autre extrémité, et le mât comporte en outre un dispositif de guidage à fourche présentant deux branches s'étendant selon deux directions divergentes.

Bien entendu, le mât peut présenter l'un ou plusieurs des perfectionnements précédemment mentionnés en relation avec le premier aspect de l'invention.

Selon un troisième aspect de l'invention, il est proposé un procédé pour arrimer un aérostat à une structure réceptrice, mis en oeuvre dans un système selon le premier aspect de l'invention, ou l'un ou plusieurs de ses perfectionnements, comportant les étapes suivantes, après largage du câble d'arrimage lesté par l'aérostat :
- guidage du câble d'arrimage par la fourche du système présentant deux branches,
- mise en place du câble d'arrimage dans le treuil à tambour d'enroulement comportant la fente pour enrouler le câble, et
- mise en rotation du treuil à tambour d'enroulement.

Selon encore un autre aspect de l'invention, il est proposé un produit programme d'ordinateur, téléchargeable depuis un réseau de communication et/ou stocké sur un support lisible par ordinateur et/ou exécutable par un microprocesseur, et chargeable dans une mémoire interne d'une unité de calcul, comportant des instructions de code de programme qui, lorsqu'elles sont exécutées par l'unité de calcul, mettent en oeuvre les étapes du procédé selon le troisième aspect de l'invention, ou l'un ou plusieurs de ses perfectionnements.

### Description des figures

D'autres avantages et particularités de l'invention apparaîtront à la lecture de la description détaillée de mises en oeuvre et de modes de réalisation nullement limitatifs, au regard de dessins annexés sur lesquels :
[Fig.1] illustre de façon schématique un premier exemple de mise en oeuvre d'un système d'arrimage selon l'invention,
[Fig.2] est une vue latérale d'un mât du système représenté sur la figure 1, dans le plan de descente de l'aéronef,
[Fig.3] est une vue de dessus du mât représenté sur la figure 2, au niveau du dispositif de guidage,
[Fig.4] comporte trois vues latérales du mât représenté sur la figure 2, dans le plan de descente de l'aéronef, dans trois positions distinctes du dispositif de capture du mât,
[Fig.5] comporte une vue latérale du mât représenté sur la figure 2, dans le plan de descente de l'aéronef, au niveau du dispositif d'emmagasinage.

### Description de modes de réalisation

Les modes de réalisation décrits ci-après n'étant nullement limitatifs, on pourra notamment considérer des variantes de l'invention ne comprenant qu'une sélection de caractéristiques décrites, par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

Sur les figures un élément apparaissant sur plusieurs figures conserve la même référence.

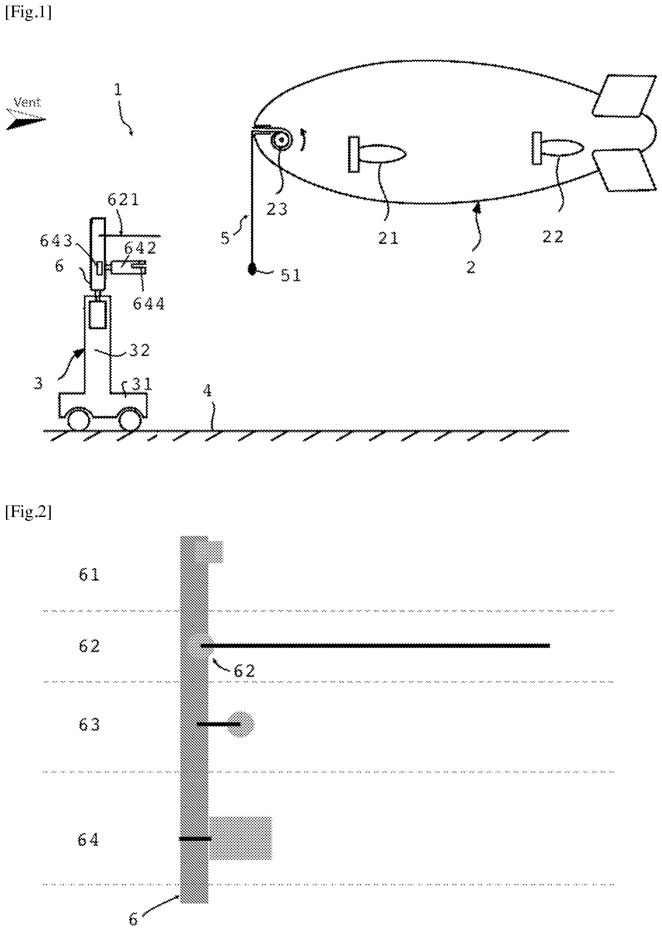

En référence à la figure 1, il est décrit un exemple de réalisation d'un système d'arrimage 1, selon l'invention, d'un aérostat 2 à une structure réceptrice 3.

Dans l'exemple représenté, l'aérostat 2 comporte des groupes propulseurs 21, 22 et un tambour d'enroulement 23 présentant un axe de rotation sensiblement horizontal, le tambour 23 étant disposé à l'avant de l'aérostat 2.

La structure réceptrice 3 comprend une base 31, éventuellement automotrice, en appui sur un sol ou une piste 4, et un pylône 32 monté sur la base 31.

Le système 1 comporte :
- un câble d'arrimage 5 agencé pour être fixé au niveau du tambour d'enroulement 23 par l'une de ses extrémités, et lesté par un poids 51 en son autre extrémité,
- un mât 6 agencé pour être fixé à rotation sur un axe vertical de la structure réceptrice 3, et plus précisément sur le pylône 32.

Dans l'exemple représenté, le câble d'arrimage 5 est électriquement conducteur.

La figure 2 illustre les différentes zones fonctionnelles du mât 6 selon l'invention.

Le mât comporte :
- une zone de tête de mât 61 agencée pour être raccordée mécaniquement à l'aérostat 2, puis
- une zone de guidage 62 du câble d'arrimage 5, puis
- une zone de capture 63 du câble d'arrimage 5, puis
- une zone 64 pour tirer sur le câble d'arrimage 5 et l'emmagasiner.

Ces zones sont disposées de haut en bas du mât 6, dans l'ordre indiqué.

### Description de la partie de guidage 62

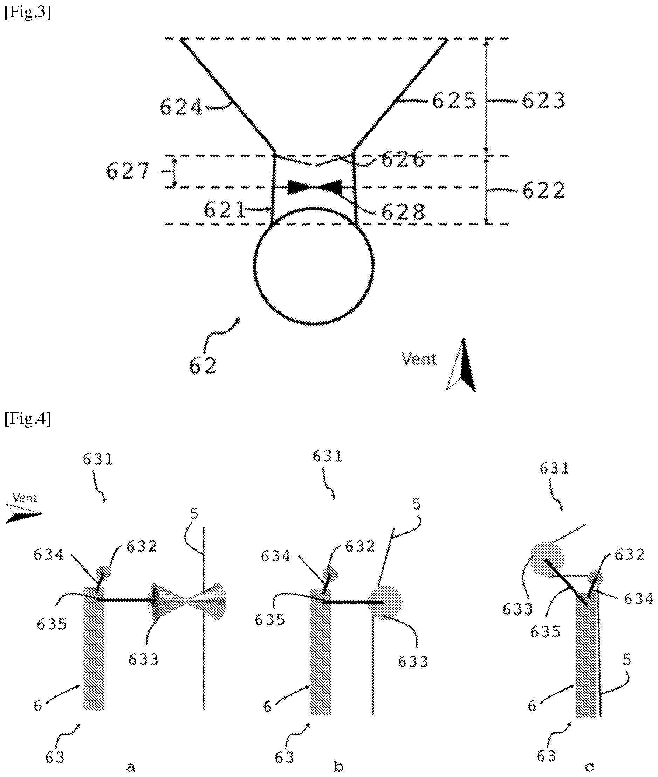

En référence à la figure 3, le mât 6 est équipé au niveau de la zone de guidage 62 d'un dispositif de guidage à fourche 621.

Le dispositif de guidage à fourche 621 comporte une partie proximale 622 présentant une conformation en U, et une partie extrémale 623 présentant deux branches 624 et 625, chacune des branches s'étendant selon deux directions divergentes depuis une extrémité supérieure d'une barre verticale du U de la partie proximale.

La fourche est également électriquement conductrice afin de permettre la décharge électrostatique de l'aérostat 2 lorsque le câble 5 d'arrimage entre en contact avec l'une des deux branches 623 et 624.

La conduction électrique est aussi assurée entre la fourche 621, le dispositif de verrouillage 626 et la terre.

Le long du mouvement du dirigeable vers l'axe du mât, le câble est guidé par la fourche vers le mât.

Le dispositif de guidage 621 présente un dispositif de verrouillage 626 séparant la partie proximale 622 de la partie extrémale 623.

Le dispositif de guidage à fourche présente deux segments, disposés sensiblement dans le même plan que celui formé par les deux branches 624 et 625, chacun présentant une extrémité tournée du côté de la partie proximale 622 de la fourche 621 et présentant une extrémité disposée au niveau de l'extrémité de la branche raccordée à l'extrémité verticale du U de la fourche 621. Le dispositif 626 a pour objet premier d'empêcher la sortie du câble une fois rentré dans la zone proximale 622.

Bien entendu, le dispositif de verrouillage 626 peut être escamotable, de sorte à autoriser une libération du câble d'arrimage 5.

Le dispositif de guidage 621 comporte en outre un détecteur de passage de câble au niveau du dispositif de verrouillage 626, disposé de sorte de séparer fonctionnellement la partie proximale 622 de la fourche de sa partie distale 623.

Une poulie de fourche 628, en forme de diabolo selon l'exemple représenté, est montée à rotation sur la barre verticale du U du dispositif à fourche 61, entre les barres verticales du U.

Plus généralement, la poulie de fourche 628 a pour fonction de conduire le câble 5 de n'importe quel point sur la largeur de la partie proximale 622 vers le centre de ladite partie.

### Description de la partie de capture 63

En référence à la figure 4, le mât 6 est équipé au niveau de la zone de capture 63 d'un dispositif de capture à poulies 631.

Sur la sous-figure a, le dispositif de capture à poulies 631 est dans une position libre.

Sur la sous-figure b, le dispositif de capture à poulies 631 est dans une position intermédiaire de capture.

Sur la sous-figure c, le dispositif de capture à poulies 631 est dans une position finale de capture.

Une portion du câble d'arrimage 5 est illustré sur chacune des sous-figures a, b et c.

Le dispositif de capture à poulies 631 comporte deux poulies, respectivement une poulie fixe 632 et une poulie mobile 633.

La poulie fixe 632 présente un axe de rotation perpendiculaire au plan de descente de l'aéronef 2 et est portée par un bras 634, de manière à ce que sa gorge soit disposée dans le plan de descente de l'aéronef, sous le vent du mât à une distance alignée sur la fente 644 du système de guidage.

La poulie mobile 633 est de type diabolo.

Plus généralement, la poulie mobile 633 a pour fonction de conduire le câble 5 de n'importe quel point sur la largeur de ladite poulie vers le centre de ladite poulie.

L'axe de la poulie mobile 633 est monté à rotation sur un bras 635.

Comme cela est illustré sur la figure a, la poulie mobile 633 peut présenter une première position, dite libre, dans laquelle l'axe de rotation de la poulie s'inscrit dans le plan de descente de l'aéronef 2, et est de préférence perpendiculaire à l'axe longitudinal du mât 6.

Comme cela est illustré sur la figure b, la poulie 633 peut présenter une deuxième position, dite de capture, dans laquelle l'axe de rotation de la poulie est perpendiculaire au plan de descente de l'aéronef, et est de préférence perpendiculaire à l'axe longitudinal du mât 6.

Le passage de la position libre de la poulie à la position de capture de la poulie permet de capturer le câble d'arrimage 5.

Le bras 635 est monté à rotation sur le mât 6 selon un axe de rotation perpendiculaire au plan de descente de l'aéronef.

Le bras 635 peut être positionné dans une position intermédiaire de capture, de préférence orthogonale au mât 6 et dans laquelle le bras 635 est perpendiculaire au mât 6 et dirigé sous le vent, comme cela est illustré par la figure b.

Le bras 635 peut être positionné dans une position finale de capture, décalant sa gorge au vent, au vent de la gorge sous le vent de la poulie fixe 632, comme cela est illustré par la figure c.

Dans cette position finale de capture, le câble d'arrimage 5 est guidé par la poulie 633 avant d'être guidé par la poulie 632.

### Description de la partie de guidage 64

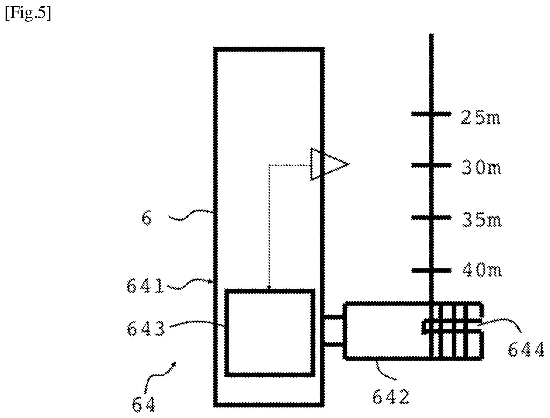

En référence à la figure 5, le mât 6 est équipé au niveau de la zone de capture 64 d'un dispositif 641 pour tirer sur le câble d'arrimage 5 et l'emmagasiner.

Le dispositif 641 comporte un treuil à tambour d'enroulement 642 dont l'axe est entraîné par un moteur 643. L'axe du tambour d'enroulement est horizontal. Le tambour d'enroulement 642 comporte une fente 644 agencée pour recevoir l'extrémité lestée du câble d'arrimage 5.

Le câble comporte des données de distance entre l'aérostat et la zone de tête de mât 61, comme cela est illustré par la figure 5.

Le dispositif 641 comporte en outre un lecteur 645 de données de distance portées par le câble d'arrimage 5.

Les données de distance lues par le lecteur 645 peuvent être utilisées pour contrôler la vitesse de rotation du moteur 643.

### Description de la zone de tête de mât 61

La zone de tête de mât comporte des moyens de verrouillage mécanique du mât 6 avec l'aérostat 2.

La zone de tête de mât comporte des moyens de connexions de maintenance pour les systèmes intégrés de l'aérostat 2.

*Procédé d'arrimage mis en oeuvre dans ce système.*

Lorsque l'aérostat 2 se trouve à l'approche de la structure réceptrice 3, le pilote déclenche une procédure d'atterrissage.

La tête de mât 6, qui est montée à rotation sur le pylône 32, est orientée de sorte que la bissectrice de l'angle formé par les deux branches 624 et 625 est sous le vent, dans la direction opposée au lit du vent.

La longueur et l'angle entre les deux branches 624 et 625 sont suffisants pour permettre au pilote d'amener le câble d'arrimage 5 entre elles, compte tenu des capacités de précision du dirigeable.

Le déroulement du tambour 23 est contrôlé de manière à libérer le câble en déroulement et permettre au lest 51 de tirer sur le câble tout en limitant les efforts de traction.

Avant qu'une partie du câble 5 touche la poulie de fourche 628, elle coupe l'axe de détection du dispositif d'emprisonnement 626 et est ainsi détectée par une unité de contrôle (non représentée).

L'unité de contrôle est configurée pour démarrer le procédé de capture du câble d'arrimage sur détection de la présence du câble d'arrimage dans la zone 627.

La partie de capture 63, qui est initialement dans sa position libre, bascule dans la position intermédiaire de capture, dans laquelle le câble est capturé, puis dans la position finale de capture dans laquelle le câble passe par la poulie mobile puis par la poulie fixe.

Une fois le câble correctement positionné à l'intérieur de la fente 644, le tambour fendu 642 est mis en rotation par le moteur 643 pour enrouler le câble d'arrimage 5 et amener le dirigeable au niveau de la zone de tête du mât 61. L'extrémité du câble d'arrimage 5 peut être équipée d'un dispositif d'arrêt pour empêcher tout glissement sur le tambour.

Pendant le rembobinage du câble 5 par le tambour 642, les branches de la fourche 621 peuvent être déplacées afin de les éloigner du corps de l'aérostat 2 et d'empêcher tout contact avec ce dernier.

À la fin du rembobinage, le nez de l'aérostat 2 est correctement positionné sur la tête du mât 61. La connexion est alors verrouillée mécaniquement. Des moyens peuvent être fournis pour assurer automatiquement les connexions de maintenance pour les systèmes intégrés.

Une fois la connexion verrouillée, le câble peut être rembobiné dans l'aérostat 2.

Bien sûr, l'invention n'est pas limitée aux exemples qui viennent d'être décrits et de nombreux aménagements peuvent être apportés à ces exemples sans sortir du cadre de l'invention selon les revendications annexées.

## Revendications

1. Système (1) pour arrimer un aérostat (2) à une structure réceptrice (3), comprenant :
- un câble d'arrimage (5) agencé pour être fixé sur l'aérostat par l'une de ses extrémités,
- un mât (6) agencé pour être monté à rotation sur la structure réceptrice, le mât comportant un treuil à tambour d'enroulement (642) comportant une fente (644) agencée pour recevoir une partie du câble située du côté de l'autre extrémité du câble d'arrimage (5),
- le câble d'arrimage est lesté par un poids (51) en son autre extrémité,
- le mât comporte en outre un dispositif de guidage (621) à fourche présentant deux branches (624, 625) s'étendant selon deux directions divergentes,
**caractérisé en ce que**
le dispositif de guidage (61) présente un dispositif d'emprisonnement (626) séparant le dispositif de guidage en une partie proximale (622) et une partie distale (623), la partie distale comportant les deux branches (624, 625), ledit dispositif d'emprisonnement étant agencé pour empêcher une partie du câble lesté présente dans la partie proximale de parvenir dans la partie distale, et
ledit système (1) comportant en outre un détecteur de passage de câble présentant un axe de détection au niveau du dispositif d'emprisonnement (626).

2. Système selon la revendication précédente, dans lequel le câble d'arrimage (5) et le dispositif de guidage à fourche (61) sont en matériaux conducteurs d'électricité.

3. Système selon l'une quelconque des revendications précédentes, dans lequel le mât comporte en outre un dispositif de capture (63) du câble d'arrimage disposé entre le dispositif de guidage (621) et le treuil à tambour d'enroulement (642).

4. Système selon l'une quelconque des revendications précédentes, dans lequel le câble d'arrimage (5) présente des données de distance inscrites le long du câble d'arrimage (5) et dans lequel le mât comporte un lecteur (645) desdites données de distance.

5. Système selon la revendication précédente, comportant en outre un moteur (643) de mise en rotation du treuil à tambour d'enroulement (642) et un contrôleur configuré pour piloter le moteur à partir des données lues par le lecteur (645).

6. Procédé pour arrimer un aérostat (2) à une structure réceptrice (3), mis en oeuvre dans un système selon l'une quelconque des revendications précédentes de système, comportant les étapes suivantes, après largage du câble d'arrimage (5) lesté par l'aérostat :
- guidage du câble d'arrimage par la fourche du système présentant deux branches (624, 625),
- mise en place du câble d'arrimage dans le treuil à tambour d'enroulement (642) comportant la fente (644) pour enrouler le câble (5), et
- mise en rotation du treuil à tambour d'enroulement (642).

## Patentansprüche

1. System (1) zum Befestigen eines Luftfahrzeugs (2) an einer Aufnahmestruktur (3), umfassend:
- ein Befestigungskabel (5), das eingerichtet ist, um mit einem seiner Enden an dem Luftfahrzeug befestigt zu werden,
- einen Mast (6), der eingerichtet ist, um an der Aufnahmestruktur drehbar montiert zu werden, wobei der Mast eine Trommelwinde (642) für eine Aufwicklung vorweist, die einen Schlitz (644) vorweist, der zum Aufnehmen eines Teil des Kabels, der sich auf der Seite des anderen Endes des Befestigungskabels (5) befindet, eingerichtet ist,
- wobei das Befestigungskabel durch ein Gewicht (51) an seinem anderen Ende beschwert ist,
- wobei der Mast ferner eine Gabelführungsvorrichtung (621) vorweist, die zwei Arme (624, 625) aufweist, die sich in zwei divergierende Richtungen erstrecken,
**dadurch gekennzeichnet, dass:**
die Führungsvorrichtung (61) eine Fangvorrichtung (626) aufweist, die die Führungsvorrichtung in einen proximalen Teil (622) und einen distalen Teil (623) trennt, wobei der distale Teil die zwei Schenkel (624, 625) vorweist, wobei die Fangvorrichtung zum Verhindern, dass ein Teil des beschwerten Kabels, das in dem proximalen Abschnitt vorhanden ist, in den distalen Teil gelangt, eingerichtet ist, und
wobei das System (1) ferner einen Kabeldurchgangsdetektor vorweist, der eine Detektionsachse auf der Höhe der Fangvorrichtung (626) aufweist.

2. System nach dem vorstehenden Anspruch, wobei das Befestigungskabel (5) und die Gabelführungsvorrichtung (61) aus elektrisch leitfähigen Materialien sind.

3. System nach einem der vorstehenden Ansprüche, wobei der Mast ferner eine Vorrichtung zum Auffangen (63) des Befestigungskabels vorweist, die zwischen der Führungsvorrichtung (621) und der Trommelwinde (642) für die Aufwicklung eingerichtet ist.

4. System nach einem der vorstehenden Ansprüche, wobei das Befestigungskabel (5) Entfernungsdaten aufweist, die entlang des Befestigungskabels (5) eingeschrieben sind, und wobei der Mast eine Leseeinrichtung (645) für die Entfernungsdaten vorweist.

5. System nach dem vorstehenden Anspruch, das ferner einen Motor (643) zum Drehen der Trommelwinde (642) für die Aufwicklung und eine Steuerung vorweist, die zum Steuern des Motors aus den Daten, die durch die Leseeinrichtung (645) eingelesen sind, konfiguriert ist.

6. Verfahren zum Befestigen eines Luftfahrzeugs (2) an einer Aufnahmestruktur (3), das in einem System nach einem der vorstehenden Systemansprüche operativ umgesetzt wird, das die folgenden Schritte nach dem Abwurf des beschwerten Befestigungskabels (5) durch das Luftfahrzeug vorweist:
- Führen des Befestigungskabels durch die Gabel des Systems, die die zwei Schenkel (624, 625) aufweist,
- Platzieren des Befestigungskabels in der Trommelwinde (642) für die Aufwicklung, die den Schlitz (644) zum Aufwickeln des Kabels (5) vorweist, und
- Drehen der Trommelwinde (642) für die Aufwicklung.

## Claims

1. System (1) for securing an aerostat (2) to a receiving structure (3), comprising:
- a securing cable (5) arranged to be attached to the aerostat by one of the ends thereof,
- a mast (6) arranged to be rotatably mounted on the receiving structure, the mast comprising a winding drum winch (642) comprising a slot (644) which is arranged to receive a portion of the cable located on the side of the other end of the securing cable (5),
- the securing cable is weighted by a weight (51) at the other end thereof,
- the mast further comprises a fork-type guide device (621) having two branches (624, 625) extending in two diverging directions,
**characterized in that**
the guide device (61) has a trapping device (626) separating the guide device into a proximal portion (622) and a distal portion (623), the distal portion comprising the two branches (624, 625), said trapping device being arranged to prevent a portion of the weighted cable present in the proximal portion from reaching the distal portion, and
said system (1) further comprising a cable passage detector having a detection axis level with the trapping device (626).

2. System according to the preceding claim, wherein the securing cable (5) and the fork-type guide device (61) are made of electrically conductive materials.

3. System according to any one of the preceding claims, wherein the mast further comprises a securing cable capture device (63) arranged between the guide device (621) and the winding drum winch (642).

4. System according to any one of the preceding claims, wherein the securing cable (5) has distance data inscribed along the securing cable (5) and wherein the mast comprises a reader (645) for said distance data.

5. System according to the preceding claim, further comprising a motor (643) for rotating the winding drum winch (642) and a controller configured to drive the motor on the basis of data read by the reader (645).

6. Method for securing an aerostat (2) to a receiving structure (3), implemented in a system according to any one of the preceding system claims, comprising the following steps, after releasing the securing cable (5) weighted by the aerostat:
- guiding of the securing cable by the fork of the system having two branches (624, 625),
- positioning the securing cable in the winding drum winch (642) comprising the slot (644) for winding the cable (5), and
- rotating the winding drum winch (642).
